Europäisches Patentamt

European Patent Office

Office européen des brevets

(19)

(11) **EP 1 731 929 A1**

(12) **EUROPEAN PATENT APPLICATION**
published in accordance with Art. 158(3) EPC

(43) Date of publication:
**13.12.2006 Bulletin 2006/50**

(51) Int Cl.:
*G02B 5/02* (2006.01)   *B29C 45/27* (2006.01)
*B29C 45/60* (2006.01)   *B29K 45/00* (2006.01)
*B29L 11/00* (2006.01)

(21) Application number: **05720978.5**

(22) Date of filing: **10.03.2005**

(86) International application number:
**PCT/JP2005/004743**

(87) International publication number:
**WO 2005/088358 (22.09.2005 Gazette 2005/38)**

(84) Designated Contracting States:
**DE FR GB**

(30) Priority: **12.03.2004 JP 2004069940**
**31.03.2004 JP 2004107269**

(71) Applicant: ZEON CORPORATION
Chiyoda-ku
Tokyo 100-8323 (JP)

(72) Inventors:
• **TAZAKI, Satoshi**
**Chiyoda-ku,**
**Tokyo 100-8246 (JP)**

• **ARAKAWA, Kohei**
**Chiyoda-ku,**
**Tokyo 100-8246 (JP)**
• **OBUCHI, Kazuyuki**
**Chiyoda-ku,**
**Tokyo 100-8246 (JP)**
• **TSUKADA, Keisuke**
**Chiyoda-ku,**
**Tokyo 100-8246 (JP)**
• **MURATA, Naoki**
**Chiyoda-ku,**
**Tokyo 100-8246 (JP)**

(74) Representative: **Vossius & Partner**
**Siebertstrasse 4**
**81675 München (DE)**

(54) **LIGHT DIFFUSION PLATE AND METHOD FOR PRODUCING THE PLATE**

(57)     A light diffusion plate obtained by injection molding of a thermoplastic resin and having an approximately rectangular shape having a length of a diagonal line of 400 mm or longer, wherein the fluctuation in the thickness is 200 $\mu$m or smaller, the warp is 2 mm or smaller, the fluctuation in the transmittance is 8% or smaller and the dispersion in the y-value of the reflected light is 0.004 or smaller, and a process for producing the light diffusion plate are provided. The light diffusion plate exhibits the high luminance and the small unevenness in the luminance and provides a display of images having an excellent quality on liquid display devices.

Fig. 21

EP 1 731 929 A1

**Description**

TECHNICAL FIELD

The present invention relates to a light diffusion plate. More particularly, the present invention relates to a light diffusion plate exhibiting the high luminance and the small unevenness in the luminance and providing a display of images having an excellent quality on liquid crystal display devices and a process for producing the plate.

BACKGROUND ART

Liquid crystal display devices are widely used for personal computers, thin televisions, in-vehicle panels and portable information terminals. It is expected that liquid crystal display devices will substitute for cathode ray tube display devices as the liquid crystal display devices have greater sizes and exhibit more excellent performances. Since the liquid crystal does not emit light spontaneously, the liquid crystal display device needs an external light source. As the external light source, light sources of the side light type having a light sources disposed at a side edge of the liquid crystal display device and light sources of the direct type having a light source disposed at the back side of the liquid crystal display device are practically used. The light source of the side light type has the low luminance although the thickness of the device can be decreased. The light source of the direct type is suitable for liquid crystal display devices having a great size which requires the high luminance.

In a liquid crystal display device of the direct type, light sources such as a plurality of cold cathode ray tubes are arranged at the back side of the housing of the device. The incident light is diffused with a light diffusion plate and converted into planar light having the uniform luminance. Where necessary, a reflection plate is disposed at the back side of cold cathode ray tubes, and gradation printing is made at the back face of the light diffusion plate. A light condensing sheet and a diffusion sheet may be laminated to the front face of the light diffusion plate. It is required for a light diffusion plate that the balance between transmission of light and diffusion of light is excellent, the warp is absent, strength is sufficient, and the unevenness in the luminance is absent.

As the material for the light diffusion plate, a plate molded out of a thermoplastic resin containing a light diffusing agent is used. As the process of molding to prepare the light diffusion plate, the extrusion molding process, the casting process and the injection molding process can be used. In accordance with the extrusion molding process, although a material sheet for the light diffusion plate can be efficiently produced, working to prepare the light diffusion plate takes labor, and a loss of the material arises. In accordance with the casting process, although a light diffusion plate having a great strength and exhibiting no optical strain can be obtained, the productivity is insufficient. In accordance with the injection molding, a light diffusion plate can be produced in a short time with fewer steps of working after the molding. Injection molding of a light diffusion plate having a great size is technically difficult in accordance with a conventional process in which a melted thermoplastic resin is injected from side gates at the side face of a cavity. Production of a light diffusion plate having a great size in accordance with the injection molding is made possible by forming many pin point gates at the face of the light diffusion plate receiving incident light. However, a problem arises in that the luminance tends to become uneven due to marks formed by the pin point gates.

As the injection molding process which keeps the height of marks formed by the gates always constant and provides an article molded out of a resin without the necessity of examination and finishing, a process comprising conducting injection molding using a mold in which, in a pin gate having a gate land connected to a depressed portion of the article, a constriction is formed with a taper at the side of the sprue and a taper at the side of the article adjacent to each other on the gate land, and the constriction is placed at the inside of the depressed portion, is proposed. In an example, injection molding is conducted using pin point gates having an angle of inclination at the tip of the gates of 7 degrees (Patent Reference 1). However, when the light diffusion plate obtained by molding using the pin point gates is mounted to a liquid crystal display device, a problem arises in that the unevenness in the luminance is found in the display of images on the liquid crystal display device, and the quality of the display of images deteriorates.

As the back light of the direct type which prevents the warp of the diffusion plate while the light weight and the quality of light emission are maintained, a back light of the direct type in which a rib portion having a net shape is formed at the front face or the back face of the diffusion plate, depressions are formed in regions corresponding to the net structure of the rib portion, and the net structure of the rib portion is small to a degree such that the fluctuation in the light due to the difference in the thickness of the diffusion plate at the depression and at the rib portion does not substantially arise, is proposed (Patent Reference 2). However, since the height of the rib is preferably 3 mm or smaller and more preferably about 2 mm, it is difficult that the unevenness in the luminance does not arise when a rib having this height is used.

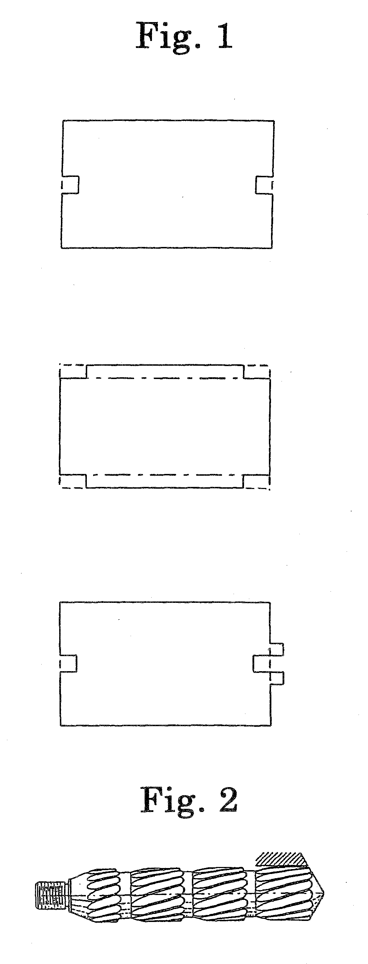

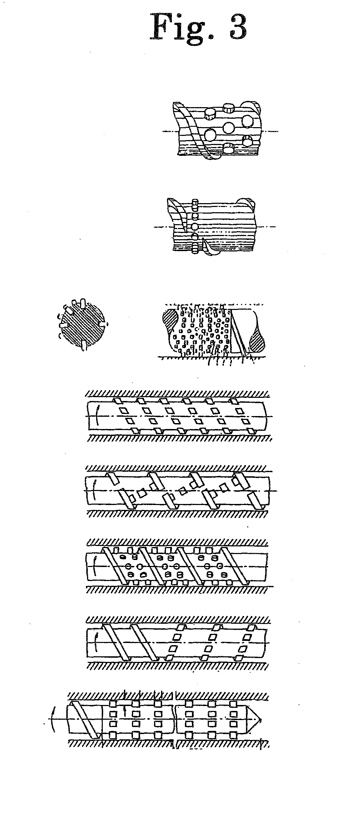

(Patent Reference 1) Japanese Patent Application Laid-Open No. Heisei 9(1997)-309131 (pages 2 and 3, Figure 2)
(Patent Reference 2) Japanese Patent Application Laid-Open No. 2003-297120 (pages 2 and 3, Figure 3)

The present invention has an object of providing a light diffusion plate exhibiting the high luminance and the small unevenness in the luminance and provides a display of images having an excellent quality and a process for producing the plate

DISCLOSURE OF THE INVENTION

As the result of intensive studies by the present inventors to overcome the above problems, it was found that a light diffusion plate having a great size having a length of a diagonal line of 400 mm or longer which had the fluctuation in the thickness of 200 $\mu$m or smaller, the warp of 2 mm or smaller, the fluctuation in the transmittance of 8% or smaller and the dispersion in the y-value of reflected light of 0.004 or smaller exhibited the high luminance and the small unevenness in the luminance and provided a display of images having an excellent quality on liquid crystal display devices, and that the above light diffusion plate could be easily produced when injection molding was conducted by using a screw having a mixing mechanism, selecting the number of the pin point gates within a specific range in accordance with the area and the thickness of the major face of the light diffusion plate and adjusting the space portion of the ejector space of the mold at 0.01 to 80% of the area of the major face of the cavity. The present invention has been completed based on the knowledge.

The present invention provides:

(1) A light diffusion plate, obtained by injection molding of a thermoplastic resin, having an exactly or approximately rectangular shape with a diagonal line of 400 mm or longer,
wherein the fluctuation in the thickness is 200 $\mu$m or smaller,
the warp is 2 mm or smaller,
the fluctuation in the transmittance is 8% or smaller and
the dispersion in the y-value of reflected light is 0.004 or smaller;
(2) The light diffusion plate according to (1), which is obtained by the injection molding of the thermoplastic resin using an injection molding machine having a screw
which
has a mixing mechanism and
has a value of $L_1/L$ from 0.03 to 0.5
when L represents an effective length of the screw and $L_1$ represents the length of the mixing mechanism;
(3) The light diffusion plate according to any one of (1) and (2), which is obtained by the injection molding of the thermoplastic resin
using a mold having a plurality of pin point gates,
wherein the number of the gate is $2^n$ and is $\{s/(t+2)\} \times 10^{-4}$ or greater
when n represents an integer from 1 to 5, s represents the area ($mm^2$) of the major face of the cavity and t represents the depth (mm) of the cavity;
(4) The light diffusion plate according to any one of (1) to (3), which is obtained by the injection molding of the thermoplastic resin
using a mold in which, when the ejector space is cut by the plane parallel with the major face of the cavity, the sectional area of the space portion is from 0.01 to 80% of the area of the major face of the cavity;
(5) The light diffusion plate according to any one of (1) to (4), wherein the thermoplastic resin is a polymer resin having an alicyclic structure; and
(6) A process for producing the light diffusion plate described in any one of (1) to (5) which comprises:

measuring an amount of natural pellets and an amount of a master batch using a batch type automatic weighing machine,
mixing the weighed natural pellets and master batch by a mixer until a variation coefficient becomes 20 or smaller to obtain a mixture of the natural pellets and the master batch,
drying the obtained mixture by a dryer to obtain a dried mixture,
supplying the dried mixture to an injection machine, and
injection molding the dried mixture.

When the light diffusion plate of the present invention is mounted to a liquid crystal display device, a display of images having an excellent quality can be obtained with the high luminance and the suppressed unevenness in the luminance.

BRIEF DESCRIPTION OF THE DRAWINGS

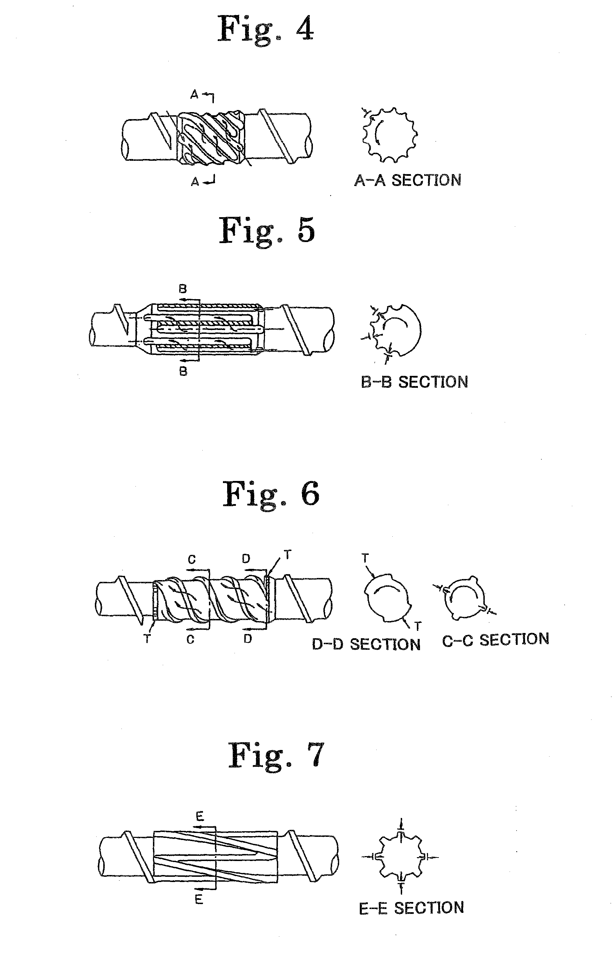

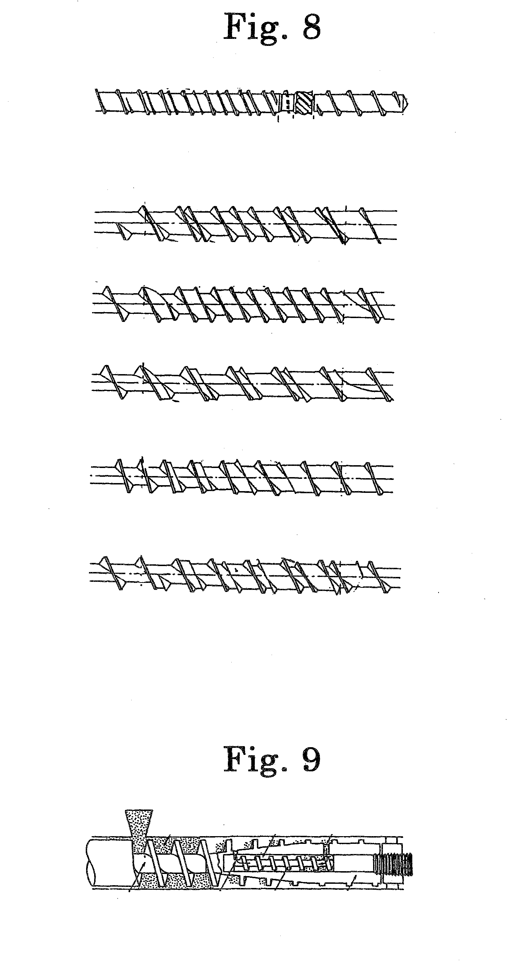

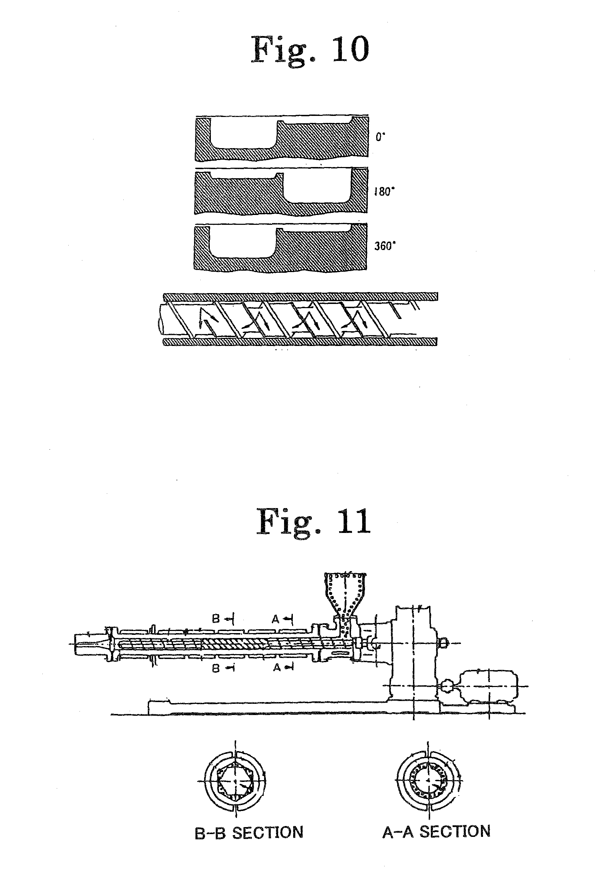

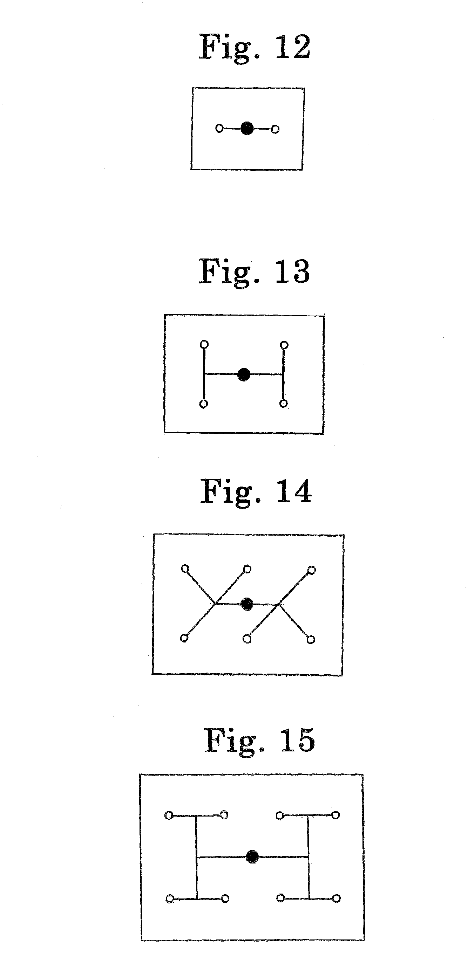

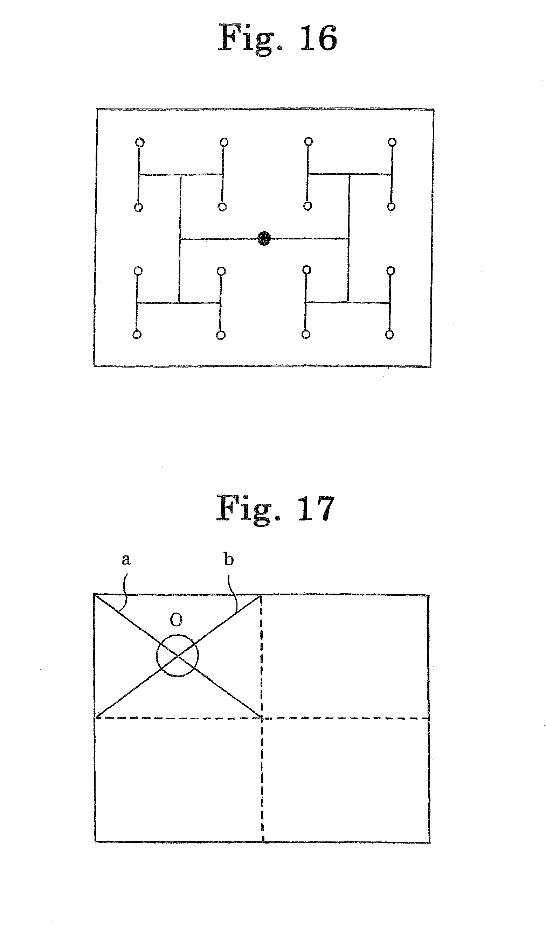

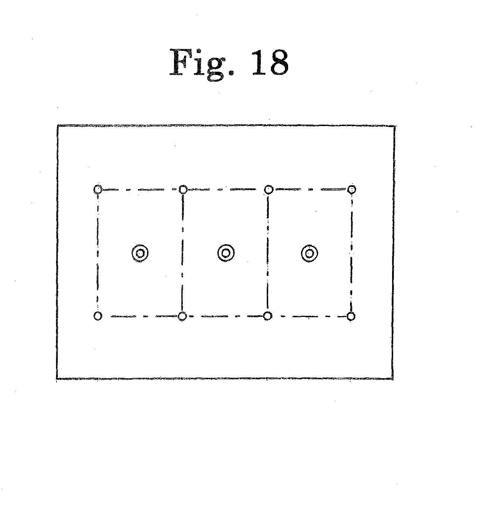

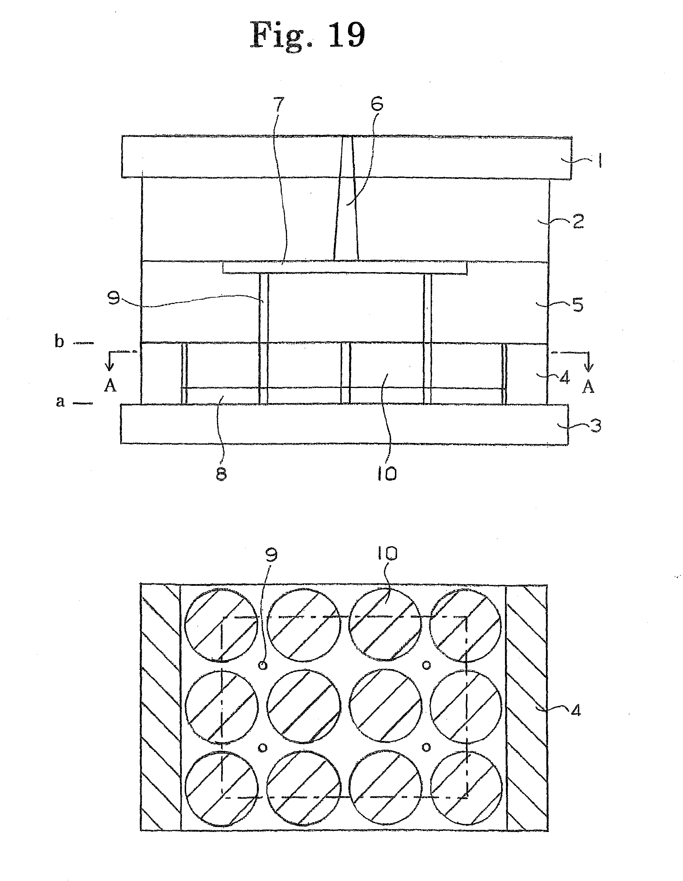

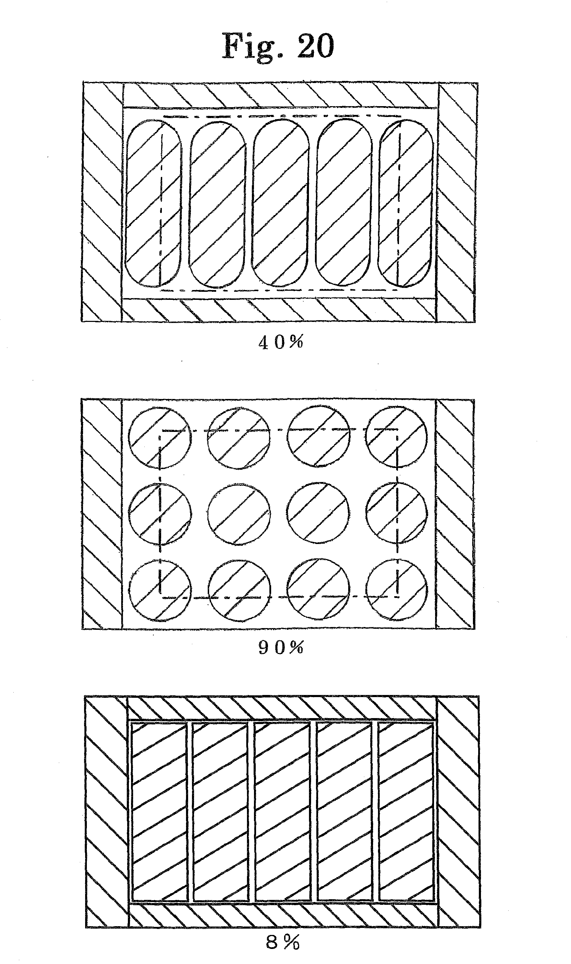

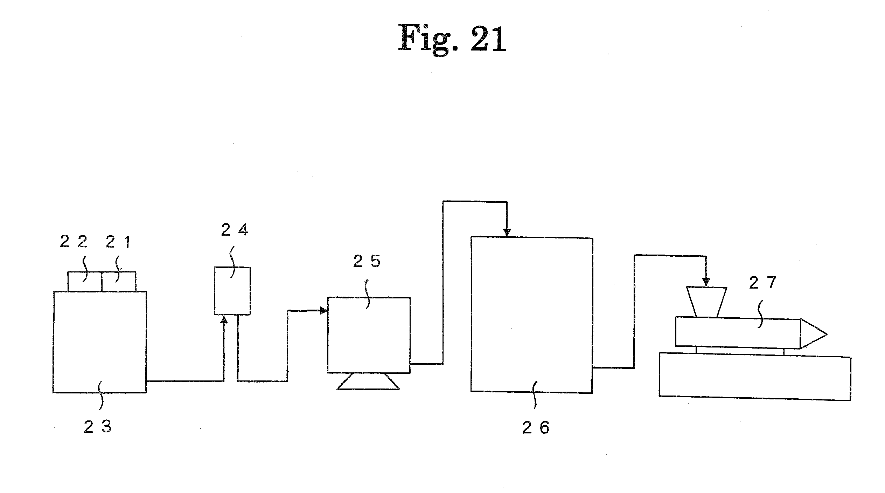

Figure 1 shows a diagram exhibiting light diffusion plates having an approximately rectangular shape. Figure 2 shows a diagram exhibiting an example of a screw having a mixing mechanism. Figure 3 shows a diagram exhibiting another example of a screw having a mixing mechanism. Figure 4 shows a diagram exhibiting another example of a screw having a mixing mechanism. Figure 5 shows a diagram exhibiting another example of a screw having a mixing mechanism. Figure 6 shows a diagram exhibiting another example of a screw having a mixing mechanism. Figure 7 shows a diagram exhibiting another example of a screw having a mixing mechanism. Figure 8 shows a diagram exhibiting another example of a screw having a mixing mechanism. Figure 9 shows a diagram exhibiting another example of a screw having a mixing mechanism. Figure 10 shows a diagram exhibiting another example of a screw having a mixing mechanism. Figure 11 shows a diagram exhibiting another example of a screw having a mixing mechanism. Figure 12 shows a diagram exhibiting an example of the arrangement of a plurality of pin point gates. Figure 13 shows a diagram exhibiting another example of the arrangement of a plurality of pin point gates. Figure 14 shows a diagram exhibiting another example of the arrangement of a plurality of pin point gates. Figure 15 shows a diagram exhibiting another example of the arrangement of a plurality of pin point gates. Figure 16 shows a diagram exhibiting another example of the arrangement of a plurality of pin point gates. Figure 17 shows a diagram exhibiting the positions of gates in a mold having 4 gates. Figure 18 shows a diagram exhibiting the position of a vent hole for evacuation. Figure 19 shows a diagram exhibiting an ejector space in a mold. Figure 20 shows a schematic sectional diagram exhibiting an ejector space. Figure 21 shows a flow diagram of an embodiment of the process in which a mixture of natural pellets and a master batch is supplied to an injection molding machine. In the Figures, the mark 1 means a fixing plate at the fixed side, the mark 2 means a mold plate at the fixed side, the mark 3 means a fixing plate at the moving side, the mark 4 means a spacer block, the mark 5 means a mold plate at the moving side, the mark 6 means a sprue bush, the mark 7 means a cavity, the mark 8 means an ejector plate, the mark 9 means an ejector pin, the mark 10 means a support pillar, the mark 21 means a hopper for a master batch, the mark 22 means a hopper for natural pellets, the mark 23 means an automatic weighing machine of the batch type, the mark 24 means a mixer, the mark 25 means a material tank, the mark 26 means a dryer, and the mark 27 means an injection molding machine.

THE MOST PREFERRED EMBODIMENT TO CARRY OUT THE INVENTION

The light diffusion plate of the present invention is obtained by injection molding of a thermoplastic resin and has an approximately rectangular shape having a length of a diagonal line of 400 mm or longer. The fluctuation in the thickness is 200 $\mu$m or smaller, the warp is 2 mm or smaller, the fluctuation in the transmittance is 8% or smaller and the dispersion in the y-value of the reflected light is 0.004 or smaller.

Since a small light diffusion plates having a diagonal line shorter than 400 mm has little tendency to have the fluctuation in the thickness and the warp, and the liquid crystal display device to which the light diffusion plate is mounted has a small size, a decrease in the quality of displayed images does not cause much problem even when the transmittance and the y-value are not uniform. When a light diffusion plate having a great size which has a diagonal line of 400 mm or longer is produced in accordance with the injection molding, the light diffusion plate tends to have the uneven thickness and the warp, and the fluctuations in the transmittance and the y-value tend to arise. The quality of display of images tends to decrease when the light diffusion plate is mounted to a liquid crystal display device due to the decrease in the luminance and in the uniformity of the luminance. When a light diffusion plate having a length of the diagonal line of 400 mm or longer has the fluctuation in the thickness of 200 $\mu$m or smaller, the warp of 2 mm or smaller, the fluctuation in the transmittance of 8% or smaller and the dispersion in the y-value of the reflected light of 0.004 or smaller, a linear light source is diffused to form a planer light source having the high luminance and the suppressed unevenness in the luminance, and a display of images having an excellent quality can be obtained.

It is preferable that the light diffusion plate of the present invention has the fluctuation in the thickness of 150 $\mu$m or smaller and more preferably 100 $\mu$m or smaller. The uniformity of the luminance can be improved by decreasing the fluctuation in the thickness. It is preferable that the light diffusion plate of the present invention has the warp of 1.5 mm smaller and more preferably 1.0 mm or smaller. Assembly to produce a liquid crystal display device can be facilitated, and the uniformity of the luminance can be improved by decreasing the warp. It is preferable that the light diffusion plate of the present invention has the fluctuation in the transmittance of 7% or smaller and more preferably 6% or smaller. The uniformity of the luminance can be improved by decreasing the fluctuation in the transmittance. It is preferable that the light diffusion plate of the present invention has the dispersion in the y-value of the reflected light of 0.003 or smaller and more preferably 0.002 or smaller. The uniformity of the luminance can be improved by decreasing the dispersion in the y-value of the reflected light.

It is preferable that the light diffusion plate of the present invention has the thickness of 0.4 to 5 mm and more preferably 0.8 to 4 mm. When the thickness is smaller than 0.4 mm, a means for preventing bending due to the weight of the plate itself such as an increase in the number of the supporting poles in the plate is necessary, and the cost of the back light tends to increase. The molding tends to become difficult when the thickness exceeds 5 mm.

In general, a light diffusion plate has protrusions and depressions at edge portions for attaching the plate to a liquid crystal display device and does not have an accurately rectangular shape in many cases. In these cases, the length of the diagonal line of a rectangle formed by extending each edge of the rectangle of the light diffusion plate is used as the length of the diagonal line. Figure 1 shows a diagram exhibiting light diffusion plates having an approximately rectangular shape. As shown in three examples in Figure 1, a rectangle is formed by extending each edge as shown by the broken lines. The edge is not extended in the manner shown by the chained line in the central figure.

In the present invention, it is preferable that the thickness, the transmittance and the y-value of the reflected light are measured at 25 intersections of 10 virtual straight lines which are drawn as follows: 4 virtual straight lines parallel with each edge are drawn each at a position inside the edge by 20 mm, and virtual three straight lines are drawn between each pair of straight lines faced to each other in a manner such that the distance between the pair of the straight lines is divided into four equal portions.

The thickness is measured using an ultrasonic thickness meter, and the difference between the maximum thickness and the minimum thickness can be used as the fluctuation in the thickness.

As for the fluctuation in the transmittance, the total light transmittance is measured in accordance with the method of Japanese Industrial Standard K 7361-1 using an integrating sphere type light transmittance meter, and the fluctuation in the transmittance can be obtained from the maximum value, the minimum value and the average value in accordance with the following equation:

$$\text{The fluctuation in the transmittance (\%)} =$$

$$\{(\text{maximum value} - \text{minimum value}) / \text{average value}\} \times 100$$

The dispersion in the y-value of the reflected light is obtained by measuring the y-value of the reflected light in accordance with the method of Japanese Industrial Standard Z 8722 using a colorimeter, and the difference between the maximum value and the minimum value is used as the dispersion in the y-value of the reflected light.

As for the warp, a light diffusion plate is placed on a horizontally placed flat plate 24 hours after the injection molding in a manner such that four corners of the light diffusion plate are raised from the surface of the flat plate, and the distance of raising is measured at the four corners. The average value of the obtained values is used as the warp.

As for the luminance and the uniformity of the luminance, an optical sheets and a light diffusion plate are removed from a liquid crystal cell in a commercial television having a liquid crystal display device, and a light diffusion plate obtained by the injection molding is mounted. Without mounting an optical sheets, the front luminance is measured at 25 intersections obtained in the same manner as that in the measurement of the fluctuation in the thickness using a luminance meter, and the average value is obtained. The uniformity of the luminance can be obtained in accordance with the following equation:

$$\text{The uniformity of the luminance} =$$

$$\{(\text{maximum value} - \text{minimum value}) / \text{average value}\} \times 100$$

In the present invention, the light diffusion plate having a great size which has the small fluctuation in the thickness, the warp, the fluctuation in the transmittance and the dispersion in the y-value of the reflected light can be produced by injection molding of a thermoplastic resin using an injection molding machine having a screw which has a mixing mechanism and has a value of $L_1/L$ of 0.03 to 0.5 when L represents the effective length of the screw and $L_1$ represents the length of the mixing mechanism.

The structure of the mixing mechanism of the screw in the injection molding machine used in the present invention is not particularly limited. Examples of the screw having a mixing mechanism include a Dulmadge-type screw shown in Figure 2, screws having various types of pin as shown in Figure 3, screws of the barrier type shown in Figures 4 to 7, various barrier flight screws shown in Figure 8, a solid draining screw shown in Figure 9, a double wave screw shown in Figure 10 and an HM screw shown in Figure 11. Among these screws having mixing mechanisms, the screw of the barrier type shown in Figure 4 is preferable. The mixing mechanism can be used singly or in combination of two or more. It is preferable that the mixing mechanism is disposed at the compression portion or the measuring portion of the screw.

In the present invention, it is preferable that the screw having the mixing mechanism has a value of $L_1/L$ of

0.03 to 0.5 and more preferably 0.05 to 0.4 when L represents the effective length of the screw and $L_1$ represents the length of the mixing mechanism. In the present invention, the length of the mixing mechanism means the total of the length of the single major flight of the screw and the length of the portion where a mechanism for enhancing the effect of mixing is disposed. For example, in a screw in which a Dulmadge is disposed at the measuring portion of a single flight screw, the length from the back end to the front end of the Dulmadge is the length of the mixing mechanism. In a double flight screw having an auxiliary flight in addition to the major flight, the length of the region where the auxiliary flight is disposed is the length of the mixing mechanism.

In the present invention, a light diffusion plate having a great size which has the small fluctuations in the thickness, the warp, the fluctuation in the transmittance and the dispersion in the y-value of the reflected light can be produced by injection molding of a thermoplastic resin using a mold having a plurality of pin point gates, wherein the number of the gate is $2^n$ and is $\{s/(t+2)\} \times 10^{-4}$ or greater when n represents an integer of 1 to 5, s represents the area of the major face of the cavity (mm²) and t represents the depth of the cavity (mm). For example, when the mold has a dimension of the cavity of 303.4 mm×405.2 mm×1.5 mm, the number of the gate calculated in accordance with the above equation is $\{(303.4 \times 405.2)/(1.5+2)\} \times 10^{-4}$=3.51 or greater. Therefore, it is preferable that the number of the gate is 4 or greater. When the number of the gate is smaller than $\{s/(t+2)\} \times 10^{-4}$, the flow of a melted resin has strain, and there is the possibility that the complete filling is not achieved or the strain is left remaining in the light diffusion plate. When the number of the gate is $2^n$, n representing an integer of 1 to 5, the distances between the sprue to the gates can be made the same with each other. Therefore, the flow of the melted resin can be made uniform, and the injection molding can be achieved with an excellent balance. It is preferable that n represents an integer of 1 to 5, i.e., the number of the gate is 2, 4, 8, 16 or 32. When the number of the gate is 64, the construction of the runner in the mold becomes complicated, and there is the possibility that achieving the stable injection molding becomes difficult.

The relative positions of the gates are exhibited in the diagram shown in Figure 12 when the number of the gate is 2, in the diagram shown in Figure 13 when the number of the gate is 4, in the diagram shown in Figure 14 when the number of the gate is 6, in the diagram shown in Figure 15 when the number of the gate is 8, and in the diagram shown in Figure 16 when the number of the gate is 16. In the Figures, a filled circle shows the position of the sprue, and an open circle shows the position of a gate. A straight line shows a runner. In each of the diagrams shown in Figure 12 to 16, the distances between the sprue to a gate is always the same. Since the injected melted resin fills the cavity after flowing through a runner in the same distance, a uniform light diffusion plate having no strain can be obtained. Since the distance of flow of the melted resin transferred into the cavity through each gate in the cavity is decreased by disposing a plurality of gates, the pressure applied to the resin can be decreased in comparison with injection of a melted resin into the cavity through a single side gate, and a light diffusion plate having a great size can be prepared in accordance with the injection molding using a small injection molding machine having a small mold clamping force.

When the number of the gate is 6 as shown in Figure 14, there is the possibility that the condition of the flow is different between the melted resin making a turn at an acute angle and the melted resin making a turn at an obtuse angle at the branch point of the runner although the distance from the sprue to a gate is always the same. When the number of the gate is $2^n$ as shown in Figure 13, Figure 15 and Figure 16, all branches in the runner can have the right angle, and the condition of flow of the melted resin can be made the same at each branch point and each gate so that a uniform light diffusion plate having no strain can be obtained by the molding.

In the present invention, when an approximately rectangular cavity is divided into $2^n$ rectangles having approximately the same shape, and a circle having the center at the intersection of diagonal lines in each rectangle is drawn, it is preferable that one gate is present in a circle having a diameter 0.1 times the length of the diagonal line and, more preferably, 0.05 times the length of the diagonal line. Figure 17 shows a diagram exhibiting the position of gates in a mold having 4 gates. A cavity having an approximately rectangular shape is divided into four rectangles having an approximately the same shape as shown by virtual broken lines in the diagram. It is preferable that the division into $2^n$ rectangles is conducted in a manner such that the ratio of the length to the width of the rectangle obtained by the division is closest to 1. By the division in a manner such that the ratio of the length to the width of the rectangle obtained by the division is closest to 1, the distance of flow of the melted resin in the cavity is decreased, and the molding can be achieved in an excellent condition. It is preferable that a gate is disposed in a circle O having the center at the intersection of the diagonal lines a and b of the rectangle obtained by the division and a diameter 0.1 times the length of the diagonal line. When the gate is disposed at the outside of the circle, there is the possibility that the flow of the melted resin becomes uneven and obtaining a light diffusion plate exhibiting the excellent uniformity of the luminance is difficult.

In the present invention, the size of the tip of the pin point gate is not particularly limited and can be suitably selected in accordance with the size of the article to be obtained by the molding and the number of the pin point gate. In general, it is preferable that the diameter is 0.8 to 4 mm and more preferably 1 to 3 mm. When the diameter of the tip of the gate is smaller than 0.8 mm, there is the possibility that filling of the resin takes time or the melted resin generates heat at the tip of the gate to cause degradation when the speed of filling is increased. When the diameter of the tip of the gate exceeds 4 mm, there is the possibility that marks formed by the gate become significant, and the finishing work takes labor.

In the present invention, it is preferable that vent holes for evacuation are formed in the mold, and the air in the cavity is removed to the outside by reducing the pressure in the cavity of the mold during injection molding of the melted resin. The cavity is completely filled with the melted resin and the light diffusion plate having the excellent dimensional accuracy can be obtained by forming vent holes for evacuation in the mold and removing the air in the cavity to the outside by reducing the pressure in the cavity of the mold during injection molding of the melted resin.

The material of the vent hole for evacuation is not particularly limited. Sintered metals obtained from pure iron, iron-copper-based alloys, iron-carbon-based alloys, iron-carbon-copper-based alloys, iron-carbon-copper-nickel-based alloys, iron-carbon (infiltrated with copper)-based alloys, iron-nickel-based alloys, iron-carbon-nickel alloys, austenite-based stainless steel and bronze-based alloys are preferable. The diameter of the vent hole for evacuation can be suitably selected in accordance with the fluidity of the resin used for the molding. When the fluidity of the resin is relatively good, it is preferable that the diameter of the vent hole is 0.02 to 0.05 mm. When the fluidity of the resin is relatively poor, it is preferable that the diameter of the vent hole is 0.05 to 0.2 mm.

In the present invention, when two gates are present, it is preferable that the vent hole is disposed at the center of the two gates. When 4 or more gates are present, it is preferable that the vent hole is present at the center of a rectangle formed by 4 or more gates or at the center of each rectangle formed by 4 gates selected from the 4 or more gates. Figure 18 shows a diagram exhibiting the positions of vent holes for evacuation in a mold having 8 gates. In the diagram, an open circle shows the position of a gate, and a double open circle shows the position of a vent hole for evacuation. By virtually connecting the gates with chained lines, three rectangles shown in the diagram are formed. A vent hole for evacuation is formed at the center of each rectangle. When the melted resin flows into the cavity from the four gates at the corner of the rectangle toward the inside of the rectangle, the air at the inside of the rectangle flows out through the vent hole for evacuation. The melted resin fills the inside of the cavity completely, and an article having excellent dimensional accuracy can be obtained. Gas vents may be formed at the outer edges of the mold, and the air removed from the rectangle may be discharged to the outside. In the mold shown in Figure 18, the mold may have a single vent hole for evacuation at the center. In the present invention, it is preferable that the pressure at the inside of the cavity at the beginning of the injection molding is 50 kPa or smaller and more preferably 35 kPa or smaller. When the pressure at the inside of the cavity at the beginning of the injection molding exceeds 50 kPa, the filling of the cavity with the melted resin becomes insufficient, and there is the possibility that burning with gas takes place.

In the present invention, the light diffusion plate having a great size which has the small fluctuation in the thickness, the warp, the fluctuation in the transmittance and the dispersion in the y-value of the reflected light can be produced by injection molding of a thermoplastic resin using a mold having a shape such that, when an ejector space is cut by a plane parallel with the major face of the cavity, the sectional area of the space portion is 0.01 to 80% of the area of the major face of the cavity.

In the present invention, the ejector space means the space formed between a plane containing the ejector plate at the regressed position and a plane containing the ejector plate at the progressed position in the mold for injection molding. Figure 19 shows a diagram exhibiting the ejector space in a mold. In the mold exhibited by the diagram, a fixed mold plate 2 is fixed to a fixing plate at the fixed side 1, and a mold plate at the moving side 5 is fixed to the fixing plate at the moving side 3 via spacer blocks 4. A sprue bush 6 is disposed at the mold plate of the fixed side, and a cavity 7 for the light diffusion plate is formed in the mold plate of the moving side. The light diffusion plate is pushed out by four ejector pins 9 attached to an ejector plate 8. The ejector plate moves between the position a and the position b shown in the diagram, and the space between the plane at the position a and the plane at the position b is the ejector space. In the ejector space, support pillars 10 supporting the mold plate of the moving side are disposed. At the lower portion of Figure 19, a schematic sectional view of the ejector space cut along a plane containing the line A-A and parallel with the major face of the cavity is shown. In the sectional view, the position corresponding to the position of the major face of the cavity is shown by chained lines. The sectional area of the space portion obtained by cutting the ejector space by the plane parallel with the major face of the cavity is the area obtained by subtracting the sectional areas of the spacer blocks 4, the support pillars 10 and the ejector pins 9 from the sectional area of the ejector space.

In the present invention, it is preferable that the sectional area of the space portion obtained by cutting the ejector space by a plane parallel with the major face of the cavity is 0.01 to 80%, more preferably 0.02 to 75% and most preferably 0.03 to 50% of the area of the major face of the cavity. In the present invention, the major face of the cavity is the face corresponding to the upper face or the lower face of the light diffusion plate. When the sectional area of the space portion obtained by cutting the ejector space by a plane parallel with the major face of the cavity is smaller than 0.01%, there is the possibility that working to prepare the mold becomes difficult due to restriction on the arrangement of the ejector plate and the ejector pins. When the sectional area of the space portion obtained by cutting the ejector space along a plane parallel with the major face of the cavity exceeds 80%, there is the possibility that the mold is deformed during the injection molding, and the fluctuation in the thickness increases.

In the present invention, the method for adjusting the sectional area of the space portion obtained by cutting the ejector space by a plane parallel with the major face of the cavity is not particularly limited. For example, the sectional area of the space portion can be adjusted by selecting the size of the spacer block or by selecting the size and the number of the support pillar. The shape of the support pillar is not particularly limited. Examples of the shape of the support pillar include a cylindrical shape described in Japanese Industrial Standard B 5116, trigonal prisms, tetragonal prisms, hexagonal prisms and octagonal prisms.

In the present invention, it is preferable that, after the amount of natural pellets and the amount of a master batch are measured using an automatic weighing machine of the batch type, a mixture of the natural pellets and the master batch is obtained by mixing the weighed natural pellets and master batch until a coefficient of variation becomes 20 or smaller, and a dried mixture is obtained by drying the mixture by a dryer. The dried mixture is supplied to an injection machine, and the supplied dried mixture is injection molded. In accordance with this process, the light diffusion plate having an excellent quality with the small dispersions in the properties can be obtained using a master batch comprising various additives in great concentrations.

In the present invention, the additives added to the master batch are not particularly limited. Examples of the additive include fillers, plasticizers, heat stabilizers, light stabilizers, lubricants, antioxidants, ultraviolet light absorbents, light diffusing agent, flame retardants, coloring agents, antistatic agents, nucleating agents, antifungal agents, compatibilizers, crosslinking agents, shrinkage depressants, coupling agents, thickeners, mold releases, anticlouding agents and blueing agents. The number of the additive added to the master batch is not particularly limited. For example, a master batch may comprise a single additive or a plurality of additives. In the present invention, the concentration of the additive in the master batch is not particularly limited and can be suitably selected with consideration on the amounts of additives to be contained in the light diffusion plate and the relative amounts of the natural pellets and the master batch in the mixture. The process for preparing the master batch is not particularly limited. For example, the master batch can be prepared by mixing the natural pellets and the additives in specific relative amounts, followed by mixing and extruding the obtained mixture by a twin screw extruder in the form of strands and then forming pellets using a pelletizer.

In the present invention, the natural pellets are pellets of a thermoplastic resin containing no additives or containing additives in an amount of 5% by weight or less, preferably 3% by weight or less and more preferably 1% by weight or less. The pellets of a thermoplastic resin containing additives only in small amounts can be prepared, for example, by adding the additives into the reactor during the production of the thermoplastic resin.

In the present invention, the automatic weighing machine of the batch type is a weighing machine of the batch type which measures the weight of a substance for the measurement and discharges the entire amount of the substance for the measurement after the measurement.

In the present invention, the order of drying the natural pellets and the master batch by a dryer is not particularly limited. For example, the process may be conducted as follows: the natural pellets and the master batch are weighed by the automatic weighing machine of the batch type, the weighed natural pellets and master batch are mixed by a mixer, the obtained mixture is dried by a dryer, and then the dried mixture is supplied to the injection molding machine. As another process, the process may be conducted as follows: the natural pellets and the master batch are dried by a dryer, the dried natural pellets and master batch are weighed by the automatic weighing machine of the batch type, the weighed natural pellets and master batches are mixed by a mixer, and then the obtained mixture is supplied to the injection molding machine. As still another process, the process may be conducted as follows: the natural pellets and the master batch are weighed by the automatic weighing machine, the weighed natural pellets and master batch are dried by a dryer, the dried natural pellets and master batches are mixed by a mixer, and then the obtained mixture is supplied to the injection molding machine.

Among the above processes, the process in which the natural pellets and the master batch are weighed by the automatic weighing machine of the batch type, the weighed natural pellets and master batch are mixed by a mixer, the obtained mixture is dried by a dryer, and then the dried mixture is supplied to the injection molding machine can be preferably conducted since there is no possibility of absorbing moisture after the mixture of the natural pellets and the master batch are dried and before the dried mixture is supplied to the injection molding machine, and the mixture can be treated using a single dryer.

Figure 21 shows a flow diagram of an embodiment of the process in which natural pellets and a master batch are supplied to an injection molding machine. In the present embodiment, an automatic weighing machine of the batch type 23 equipped with a hopper for a master batch 21 and a hopper for natural pellets 22, a mixer 24, a material tank 25, a dryer 26 and an injection molding machine 27 are connected in this order. In the automatic weighing machine of the batch type 23, the master batch and the natural pellets are automatically weighed in the batch manner. The master batch and the natural pellets are weighed in respective prescribed amounts by the hopper for a master batch 21 having a load cell and the hopper for natural pellets 22 having a load cell, respectively, and are dropped into a receiving tank at the lower portion of the weighing machine.

In the present invention, it is preferable that, after the master batch is weighed by the automatic weighing machine of the batch type, the natural pellets are weighed by the automatic weighing machine of the batch type in an amount such that the prescribed ratio of the amounts of the natural pellets to the master batches is obtained and then added to the master batch. The prescribed ratio of the amounts means the ratio of the amounts by weight obtained in advance by calculation in accordance with the object properties of the light diffusion plate.

When the master batch and the natural pellets are weighed simultaneously by the automatic weighing machine of the batch type, the ratio of the amounts may be occasionally somewhat different from the prescribed value. When, after the master batch is weighed accurately, the natural pellets are weighed by the automatic weighing machine of the batch type in an amount such that the prescribed ratio of the amounts of the natural pellets to the master batches is obtained and then added to the master batch, the ratio of the amounts of the natural pellets and the master batch can be accurately controlled.

In the present invention, the mixture of the natural pellets and the master batch is uniformly mixed by a mixer until the coefficient of variation becomes 20 or smaller. The process for transferring the mixture of the natural pellets and the master batch to the mixer is not particularly limited. Examples of the process of transfer include the transfer using the air pressure and the transfer by a belt conveyor. Among these processes, the transfer using the air pressure is preferable. When the transfer using the air pressure is used, for example, a blower is disposed at the downstream position of the mixer, and the mixture of the natural pellets and the master batch can be transferred with the air by reducing the pressure in the mixer. In this process, it is preferable that a filter is disposed at the inlet of the outside air of the weighing machine so that contamination with dusts can be prevented.

In the present invention, for example, when the amounts of the natural pellets and the master batch treated by the single weighing step are 3 kg, and it takes 40 seconds for the weighing and the transfer with the air combined, about 270 kg of a pellet mixture can be prepared in one hour. By weighing the natural pellets and the master batch many times in small amounts, the accuracy of the ratio of the amounts of the natural pellets to the master batch obtained by the weighing can be increased.

The coefficient of variation is the value obtained as follows: 100 g of a pellets mixture is taken out, the mixture is separated into the natural pellets and the master batch, the amount in % by weight of the master batch is calculated, this procedure is repeated 10 times, and the coefficient of variation is obtained from the average of the 10 values in % by weight and the standard deviation in accordance with the following equation:

$$\text{Coefficient of variation (\%)} = (\text{standard deviation/average value}) \times 100$$

In the present invention, the coefficient of variation for the mixture of the natural pellets and the master batch is preferably 20 or smaller, more preferably 18 or smaller and most preferably 15 or smaller.

The mixer used in the present invention is not particularly limited. Examples of the mixing machine include mixers of the horizontal cylinder type, mixers of the V-type, mixers of the double cone type, mixers of the vibration and rotation type, mixers of the single axis ribbon type, mixers of the multi axis paddle type, mixers of the rotating hoe type, mixers of the twin axis floating stirrer type, mixers of the cone screw type, mixers of the high speed stirring type, mixers of the rotating disk type, mixers of the rotating vessel type having a roller, mixers of the rotating vessel type having a stirrer, mixers of the high speed elliptical rotor type, mixers of the gas stream stirring type and mixers of no stirring type. Among these mixers, the mixer of the air stream stirring type can be preferably used since the combination with the apparatus for supplying the pressurized air is easy, and supply, mixing and discharge of the pellet mixture can be conducted in a short time. The mixing of a pellet mixture of about 3 kg by the mixer of the air stream stirring type can be completed in about 20 seconds.

In the present invention, it is preferable that the pellet mixture prepared in the mixer is stored in a material tank. By storing the pellet mixture in the material tank, a plurality of types of pellet mixtures having different compositions can be prepared using a single pair of the automatic weighing machine of the batch type and the mixer.

The dryer used in the present invention is not particularly limited. Examples of the dryer include dryers of the standing material type such as box type parallel flow dryers and box type ventilation dryers; dryers of the material transfer type such as band parallel flow dryers, band ventilation dryers and drum dryers; and dryers of the stirred material type such as fluidized bed dryers, rotating dryers, groove type stirring dryers, corn type ribbon stirring dryers, corn type screw stirring dryers and rotating dryers equipped with a steam pipe.

In the present invention, it is preferable that the drying by the dryer is conducted under an atmosphere of nitrogen gas. It is preferable that the nitrogen gas of the atmosphere has a content of nitrogen gas of 93% by volume or greater and more preferably 97% by volume or greater. By conducting the drying under the atmosphere of nitrogen gas, oxygen contained in the pellets of the resin in a very small amount is replaced with nitrogen gas so that degradation with oxygen during injection molding can be prevented, and a light diffusion plate exhibiting excellent color tone and mechanical properties can be obtained.

It is preferable that the light diffusion plate of the present invention comprises a light diffusing agent. Examples of the light diffusing agent include organic fine particles such as particles of crosslinked polymethyl methacrylates, crosslinked polystyrenes, crosslinked methyl methacrylate-styrene copolymers, crosslinked silicones and crosslinked fluororesins; and inorganic fine particles such as fine particles of silica, silica-alumina, alumina, aluminum hydroxide, magnesium hydroxide, talc, glass flakes, glass beads, sodium silicate, calcium carbonate, barium carbonate and titanium oxide.

The thermoplastic resin used in the present invention is not particularly limited. Examples of the thermoplastic resin include polymer resins having an alicyclic structure, methacrylic resins, polycarbonates, polystyrene, acrylonitrile-styrene copolymers, methyl methacrylate-styrene copolymers, ABS resins and polyether sulfones. Among these thermoplastic resins, methacrylic resins, methyl methacrylate-styrene copolymers and polymer resins having an alicyclic structure are preferable, and polymer resins having an alicyclic structure are more preferable. Since the polymer resin having an alicyclic structure exhibits excellent fluidity, the cavity of the mold can be filled under a small pressure of injection using pin point gates. Since moisture absorption is very small, excellent dimensional stability is exhibited, and the light diffusion plate does not have warp. Since the specific gravity is small, the weight of the light diffusion plate can be decreased. Since the polymer resin having an alicyclic structure suppresses formation of a weld line in comparison with other resins, the polymer resin having an alicyclic structure can be preferably used for injection molding using a mold having a plurality of pin point gates.

Examples of the polymer resin having an alicyclic structure include polymer resins having an alicyclic structure in the main chain or in side chains. The polymer resin having an alicyclic structure in the main chain is more preferable due to the excellent mechanical strength and heat resistance. As the alicyclic structure, saturated alicyclic hydrocarbon structures are preferable. The structure preferably has 4 to 30 carbon atoms, more preferably 5 to 20 carbon atoms and most preferably 5 to 15 carbon atoms. The content of the repeating unit having the alicyclic structure in the polymer resin having an alicyclic structure is preferably 50% by weight or greater, more preferably 70% by weight or greater and most preferably 90% by weight or greater.

Examples of the polymer resin having an alicyclic structure include ring-opening polymers and ring-opening copolymers of monomers having the norbornene structure and hydrogenation products thereof; addition polymers and addition copolymers of monomers having the norbornene structure and hydrogenation products thereof; polymers of a monomer having a cyclic olefin structure having a single ring and hydrogenation products thereof; polymers of a monomer having a cyclic conjugated diene structure and hydrogenation products thereof; polymers and copolymers of a monomer having a vinyl alicyclic hydrocarbon structure and hydrogenation products thereof; and hydrogenation products of polymers and copolymers having a vinyl aromatic hydrocarbon structure at unsaturated bond portions including aromatic rings. Among these polymer resins, hydrogenation products of polymers of monomers having the norbornene structure and hydrogenation products of polymers and copolymers having a vinyl aromatic hydrocarbon structure at unsaturated bond portions including aromatic rings are preferable due to the excellent mechanical strength and heat resistance.

In the present invention, the injection molding is conducted at a resin temperature (a cylinder temperature) of Tg+100(°C) to Tg+200(°C) and preferably Tg+150(°C) to Tg+200(°C) and at a mold temperature of Tg-50(°C) to Tg(°C) and preferably Tg-30(°C) to Tg(°C). Tg means the glass transition temperature of the thermoplastic resin used for the molding.

EXAMPLES

The present invention will be described more specifically with reference to examples in the following. However, the present invention is not limited to the examples.

In Examples and Comparative Examples, light diffusion plates were evaluated in accordance with the following methods.

(1) The fluctuation in the thickness
Four virtual straight lines parallel with each edge of the major face of a light diffusion plate were drawn each at a position inside the edge by 20 cm, and virtual three straight lines were drawn between each pair of straight lines faced to each other in a manner such that the distance between the pair of the straight lines was divided into four equal portions. The thickness was measured at 25 intersections of 10 virtual straight lines thus drawn using an ultrasonic wave thickness meter (manufactured by KARL DEUTSCHE Company; ECHOMETER 1073), and the difference between the maximum thickness and the minimum thickness was used as the fluctuation in the thickness.

(2) The warp
A light diffusion plate was placed on a horizontally placed flat plate 24 hours after the injection molding in a manner such that four corners of the light diffusion plate were raised from the surface of the flat plate, and the distance of raising was measured at the four corners. The average value of the obtained values was used as the warp

(3) The fluctuation in the transmittance
At the same 25 intersections of the straight lines as those used for the measurement of the thickness, the total light transmittance was measured using a color turbidity meter (manufactured by NIPPON DENSHOKU Co., Ltd.; NDH300A), and the fluctuation in the transmittance was obtained from the maximum value, the minimum value and the average value in accordance with the following equation:

$$\text{The fluctuation in the transmittance (\%)} =$$

$$\{(\text{maximum value} - \text{minimum value}) / \text{average value}\} \times 100$$

(4) The dispersion in the y-value of reflected light

At the same 25 intersections of the straight lines as those used for the measurement of the thickness, the y-value of the reflected light was measured in accordance with the method of Japanese Industrial Standard Z 8722 using a colorimeter (manufactured by NIPPON DENSHOKU KOGYO Co., Ltd.; SE200), and the difference between the maximum value and the minimum value was used as the dispersion in the y-value of the reflected light.

(5) The luminance and the uniformity of the luminance

From a 30-size liquid crystal television (manufactured by SHARP Co., Ltd.; LC-30AD1), the liquid crystal cell, the optical sheet and the light diffusion plate were removed, and a light diffusion plate obtained in accordance with the injection molding was mounted. Without mounting the optical sheet, the front luminance was measured at 25 intersections of the straight lines obtained in the same manner as that in the measurement of the fluctuation in the thickness using a luminance meter (manufactured by TOPCON Co., Ltd.; BM-7). The average value was calculated, and the uniformity of the luminance was obtained in accordance with the following equation:

$$\text{The uniformity of the luminance} =$$

$$\{(\text{maximum value} - \text{minimum value}) / \text{average value}\} \times 100$$

(6) Content of light diffusing agent

Four virtual straight lines parallel with each edge of the major face of a light diffusion plate were drawn each at a position inside the edge by 5 cm, and virtual two straight lines were drawn between each pair of straight lines faced to each other in a manner such that the distance between the pair of the straight lines was divided into three equal parts. At 16 intersections of 8 virtual straight lines thus drawn, the total light transmittance was measured using an integrating sphere type light transmittance meter (manufactured by NIPPON DENSHI KOGYO Co., Ltd.; HAZE METER NDH2000) in accordance with the method of Japanese Industrial Standard K 7361-1. Using a calibration curve showing the relation between the total light transmittance and the content of the light diffusing agent prepared in advance, the content of the light diffuser in part by weight per 100 parts by weight of the resin was obtained from the total light transmittance. The average value and the standard deviation were calculated based on 160 values obtained with respect to 10 light diffusion plates.

(7) Measurement of coefficient of variation

A pellet mixture in an amount of 100 g was taken out and separated into natural pellets and a master batch, and the content of the master batch in % by weight was calculated. This operation was repeated 10 times and, using the average value and the standard deviation obtained from the 10 samples, the coefficient of variation was obtained in accordance with the following equation:

$$\text{Coefficient of variation (\%)} =$$

$$(\text{standard deviation/average value}) \times 100$$

Example 1

Using an apparatus shown in Figure 21 having a weighing machine of the batch type, a mixer of a gas stream stirring type, a material tank, a dryer and an injection molding machine {the mold clamping force: 4,410 kN}, a light diffusion plate was prepared in accordance with the injection molding.

A polymer resin having an alicyclic structure (manufactured by NIPPON ZEON Co., Ltd.; ZEONOR 1060R) in an amount of 100 parts by weight and 10 parts by weight of fine particles comprising a crosslinked product of a polysiloxane-based polymer (manufactured by GE TOSHIBA SILICONE Co., Ltd.; TOSPEARL 120) were mixed. The mixture was mixed and extruded by a twin screw extruder (manufactured by TOSHIBA KIKAI Co., Ltd.; TEM-35B) into strands and cut by a pelletizer, and a master batch for a light diffusion plate was prepared.

The master batch for a light diffusion plate prepared above in an amount of about 300 g was accurately weighed by an automatic weighing machine of the batch type. Natural pellets (the polymer resin having an alicyclic structure described above) were weighed in an amount 9 times as much as the amount of the master batch weighed above by the automatic weighing machine of the batch type and added. The mixture of the master batch and the natural pellets was transferred by the air stream to a mixer of the gas stream stirring type, mixed in the mixer for 20 seconds, transferred to the material tank and stored therein. The coefficient of variation of the pellet mixture was obtained and found to be 3.

The pellet mixture in the material tank in amount of 5 kg was transferred to a dryer and dried under a stream of nitrogen gas at 80°C for 4 hours. The dried pellet mixture was stored in a hopper.

Using the pellet mixture obtained above, a 30 inch size light diffusion plate having a length of 460 mm, a width of 612 mm, a length of the diagonal line of 766 mm and a thickness of 2.0 mm was prepared in accordance with the injection molding. A screw of the barrier type shown in Figure 4, which had a diameter D of 60 mm, an effective length L of 1,200 mm, (L/D=20), and a groove having a length $L_1$ of 120 mm in the weighing portion as the mixing mechanism, ($L_1$/L=0.1), was attached to the injection molding machine used above. To the mold clamping apparatus, a mold which had 8 pin point gates (since {s/(t+2)} $\times$ 10-4=7.038) shown in Figure 15 on the face of the light diffusion plate receiving incident light, a sectional area of the space portion obtained by cutting the ejector space by a plane parallel with the major face of the cavity of 40% of the area of the major face of the cavity and a vent hole for evacuation at the central portion, was attached. A light diffusion plate was prepared at a cylinder temperature of 275°C, a mold temperature of 85°C, an injection speed of 100 mm/s and a cooling time of 45 sec.

The obtained light diffusion plate had the fluctuation in the thickness of 70 $\mu$m, the warp of 0.5 mm, the fluctuation in the transmittance of 2.9% and the dispersion in the y-value of the reflected light of 0.001. The average luminance was 3,820 cd/m$^2$, and the uniformity of the luminance was 80%.

Example 2

A light diffusion plate was prepared in accordance with the same procedures as those conducted in Example 1 except that the screw in the injection molding machine was replaced with a full flight screw having no mixing mechanism.

The obtained light diffusion plate had the fluctuation in the thickness of 90 $\mu$m, the warp of 0.6 mm, the fluctuation in the transmittance of 6.8% and the dispersion in the y-value of the reflected light of 0.003. The average luminance was 3,790 cd/m$^2$, and the uniformity of the luminance was 76%.

Example 3

A light diffusion plate was prepared in accordance with the same procedures as those conducted in Example 1 except that a mold in which the number of the pin point gate was 4 as shown in the arrangement in Figure 13 was used.

The obtained light diffusion plate had the fluctuation in the thickness of 100 $\mu$m, the warp of 1.4 mm, the fluctuation in the transmittance of 3.8% and the dispersion in the y-value of the reflected light of 0.001. The average luminance was 3,790 cd/m$^2$, and the uniformity of the luminance was 78%.

Example 4

A light diffusion plate was prepared in accordance with the same procedures as those conducted in Example 1 except that a mold in which the sectional area of the space portion obtained by cutting the ejector space by a plane parallel with the major face of the cavity was 90% of the area of the major face of the cavity was used.

The obtained light diffusion plate had the fluctuation in the thickness of 160 $\mu$m, the warp of 1.0 mm, the fluctuation in the transmittance of 3.5% and the dispersion in the y-value of the reflected light of 0.002. The average luminance was 3,770 cd/m$^2$, and the uniformity of the luminance was 72%.

Example 5

A light diffusion plate was prepared in accordance with the same procedures as those conducted in Example 1 except that the screw in the injection molding machine was replaced with a full flight screw having no mixing mechanism, and a mold in which the number of the pin point gate was 4 as shown in the arrangement in Figure 13 was used.
The obtained light diffusion plate had the fluctuation in the thickness of 90 $\mu$m, the warp of 1.5 mm, the fluctuation in the transmittance of 7.2% and the dispersion in the y-value of the reflected light of 0.003. The average luminance was 3,760 cd/m$^2$, and the uniformity of the luminance was 72%.

Example 6

A light diffusion plate was prepared in accordance with the same procedures as those conducted in Example 1 except that the screw in the injection molding machine was replaced with a full flight screw having no mixing mechanism, and a mold in which the sectional area of the space portion obtained by cutting the ejector space by a plane parallel with the major face of the cavity was 90% of the area of the major face of the cavity was used.
The obtained light diffusion plate had the fluctuation in the thickness of 150 $\mu$m, the warp of 0.8 mm, the fluctuation in the transmittance of 6.9% and the dispersion in the y-value of the reflected light of 0.003. The average luminance was 3,770 cd/m$^2$, and the uniformity of the luminance was 71%.

Example 7

A light diffusion plate was prepared in accordance with the same procedures as those conducted in Example 1 except that a mold in which the number of the pin point gate was 4 as shown in the arrangement in Figure 13 was used, and a mold in which the sectional area of the space portion obtained by cutting the ejector space by a plane parallel with the major face of the cavity was 90% of the area of the major face of the cavity was used.
The obtained light diffusion plate had the fluctuation in the thickness of 170 $\mu$m, the warp of 1.5 mm, the fluctuation in the transmittance of 3.3% and the dispersion in the y-value of the reflected light of 0.002. The average luminance was 3,790 cd/m$^2$, and the uniformity of the luminance was 73%.

Example 8

A light diffusion plate was prepared in accordance with the same procedures as those conducted in Example 1 except that pellets for light diffusion plates was prepared using as the thermoplastic resin a methacrylic resin (manufactured by ASAHI KASEI Co., Ltd.; DELPET 70NHX) in place of the polymer resin having an alicyclic structure, and the cylinder temperature and the mold temperature were changed to 280°C and 85°C, respectively.
The obtained light diffusion plate had the fluctuation in the thickness of 100 $\mu$m, the warp of 0.9 mm, the fluctuation in the transmittance of 3.2% and the dispersion in the y-value of the reflected light of 0.003. The average luminance was 3,690 cd/m$^2$, and the uniformity of the luminance was 71%.

Example 9

A light diffusion plate was prepared in accordance with the same procedures as those conducted in Example 1 except that a mold in which the sectional area of the space portion of the ejector space was 8% of the area of the major face of the cavity was used.
The obtained light diffusion plate had the fluctuation in the thickness of 50 $\mu$m, the warp of 0.5 mm, the fluctuation in the transmittance of 2.9% and the dispersion in the y-value of the reflected light of 0.001. The average luminance was 3,810 cd/m$^2$, and the uniformity of the luminance was 79%.

Comparative Example 1

A light diffusion plate was prepared in accordance with the same procedures as those conducted in Example 1 except that the screw in the injection molding machine was replaced with a full flight screw having no mixing mechanism, and a mold in which the number of the pin point gate was 4 as shown in the arrangement in Figure 13 and the sectional area of the space portion obtained by cutting the ejector space by a plane parallel with the major face of the cavity was 90% of the area of the major face of the cavity was used.
The obtained light diffusion plate had the fluctuation in the thickness of 240 $\mu$m, the warp of 2.5 mm, the fluctuation in the transmittance of 8.6% and the dispersion in the y-value of the reflected light of 0.005. The average luminance was 3,550 cd/m$^2$, and the uniformity of the luminance was 65%.

Figure 19 shows a diagram exhibiting a schematic sectional view of the ejector space of the mold for the injection molding used in Examples and Comparative Example cut by a plane parallel with the major face of the cavity and the sectional area of the space portion of the ejector space relative to the area of the major face of the cavity. In the figure, the position of the major face of the cavity is shown by a chained line.

The conditions of the molding in Examples 1 to 9 and Comparative Example 1 are shown in Table 1, and the results of evaluation of the obtained light diffusion plates are shown in Table 2.

Table 1

| | Thermoplastic resin | Screw | Number of pin point gate | Space in ejector space (%) |
|---|---|---|---|---|
| Example 1 | alicyclic structure | barrier type | 8 | 40 |
| Example 2 | alicyclic structure | full flight | 8 | 40 |
| Example 3 | alicyclic structure | barrier type | 4 | 40 |
| Example 4 | alicyclic structure | barrier type | 8 | 90 |
| Example 5 | alicyclic structure | full flight | 4 | 40 |
| Example 6 | alicyclic structure | full flight | 8 | 90 |
| Example 7 | alicyclic structure | barrier type | 4 | 90 |
| Example 8 | methacrylic | barrier type | 8 | 40 |
| Example 9 | alicyclic structure | barrier type | 8 | 8 |
| Comparative Example 1 | alicyclic structure | full flight | 4 | 90 |

Table 2

| | The fluctuation in the thickness ($\mu$m) | The warp (mm) | The fluctuation in the transmittance (%) | The dispersion in the y-value | The average luminance (cd/m$^2$) | The uniformity of the luminance (%) |
|---|---|---|---|---|---|---|
| Example 1 | 70 | 0.5 | 2.9 | 0.001 | 3820 | 80 |
| Example 2 | 90 | 0.6 | 6.8 | 0.003 | 3790 | 76 |
| Example 3 | 100 | 1.4 | 3.8 | 0.001 | 3790 | 78 |
| Example 4 | 160 | 1.0 | 3.5 | 0.002 | 3770 | 72 |
| Example 5 | 90 | 1.5 | 7.2 | 0.003 | 3760 | 72 |
| Example 6 | 150 | 0.8 | 6.9 | 0.003 | 3770 | 71 |
| Example 7 | 170 | 1.5 | 3.3 | 0.002 | 3790 | 73 |
| Example 8 | 100 | 0.9 | 3.2 | 0.003 | 3690 | 71 |
| Example 9 | 50 | 0.5 | 2.9 | 0.001 | 3810 | 79 |
| Comparative Example 1 | 240 | 2.5 | 8.6 | 0.005 | 3550 | 65 |

As shown in Table 2, when the light diffusion plate having the fluctuation in the thickness of 200 $\mu$m or smaller, the warp of 2 mm or smaller, the fluctuation in the transmittance of 8% or smaller and the dispersion in the y-value of the reflected light of 0.004 or smaller was used, linear light emitted from cold cathode fluorescent tubes is diffused, and a planar light source having the high luminance and the small unevenness in the luminance could be obtained. The light diffusion plate having the fluctuation in the thickness of 200 $\mu$m or smaller, the warp of 2 mm or smaller, the fluctuation in the transmittance of 8% or smaller and the dispersion in the y-value of the reflected light of 0.004 or smaller could be easily obtained by injection molding of a thermoplastic resin using a screw having a mixing mechanism and a mold having pin point gates in a number suitable for the area and the depth of the major face of the cavity or a small space portion of ejector space.

INDUSTRIAL APPLICABILITY

When the light diffusion plate of the present invention is used, a linear light source is diffused, and a planar light source having the high luminance and the small unevenness in the luminance can be obtained. A display of images having an excellent quality can be obtained by using the light diffusion plate for liquid crystal display devices having a great size.

**Claims**

1. A light diffusion plate, obtained by injection molding of a thermoplastic resin, having an exactly or approximately rectangular shape with a diagonal line of 400 mm or longer,
   wherein the fluctuation in the thickness is 200 $\mu$m or smaller,
   the warp is 2 mm or smaller,
   the fluctuation in the transmittance is 8% or smaller and
   the dispersion in the y-value of reflected light is 0.004 or smaller.

2. The light diffusion plate according to Claim 1, which is obtained by the injection molding of the thermoplastic resin using an injection molding machine having a screw
   which
   has a mixing mechanism and
   has a value of $L_1/L$ from 0.03 to 0.5
   when L represents an effective length of the screw and $L_1$ represents the length of the mixing mechanism.

3. The light diffusion plate according to any one of Claims 1 and 2, which is obtained by the injection molding of the thermoplastic resin
   using a mold having a plurality of pin point gates,
   wherein the number of the gate is $2^n$ and is $\{s/(t+2)\} \times 10^{-4}$ or greater
   when n represents an integer from 1 to 5, s represents the area ($mm^2$) of the major face of the cavity and t represents the depth (mm) of the cavity.

4. The light diffusion plate according to any one of Claims 1 to 3, which is obtained by the injection molding of the thermoplastic resin
   using a mold in which, when the ejector space is cut by the plane parallel with the major face of the cavity, the sectional area of the space portion is from 0.01 to 80% of the area of the major face of the cavity.

5. The light diffusion plate according to any one of Claims 1 to 4,
   wherein the thermoplastic resin is a polymer resin having an alicyclic structure.

6. A process for producing the light diffusion plate described in any one of Claims 1 to 5 which comprises:

   measuring an amount of natural pellets and an amount of a master batch using a batch type automatic weighing machine,
   mixing the weighed natural pellets and master batch by a mixer until a variation coefficient becomes 20 or smaller to obtain a mixture of the natural pellets and the master batch,
   drying the obtained mixture by a dryer to obtain a dried mixture,
   supplying the dried mixture to an injection machine, and
   injection molding the dried mixture.

# Fig. 1

# Fig. 2

# Fig. 3

# Fig. 4

A-A SECTION

# Fig. 5

B-B SECTION

# Fig. 6

D-D SECTION    C-C SECTION

# Fig. 7

E-E SECTION

# Fig. 8

# Fig. 9

# Fig. 10

# Fig. 11

B-B SECTION          A-A SECTION

Fig. 12

Fig. 13

Fig. 14

Fig. 15

# Fig. 16

# Fig. 17

# Fig. 18

# Fig. 19

# Fig. 20

40 %

90 %

8 %

Fig. 21

## INTERNATIONAL SEARCH REPORT

| | International application No. |
|---|---|
| | PCT/JP2005/004743 |

A. CLASSIFICATION OF SUBJECT MATTER
Int.Cl⁷ G02B5/02, B29C45/27, 45/60//B29K45:00, B29L11:00

According to International Patent Classification (IPC) or to both national classification and IPC

B. FIELDS SEARCHED

Minimum documentation searched (classification system followed by classification symbols)
Int.Cl⁷ G02B5/02, B29C45/27, 45/60//B29K45:00, B29L11:00

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho   1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-62874 A (Nippon Zeon Co., Ltd.), | 1,5 |
| Y | 13 March, 2001 (13.03.01), Par. Nos. [0002], [0036] (Family: none) | 2-4,6 |
| X | JP 2001-239556 A (Nippon Zeon Co., Ltd.), | 1,5 |
| Y | 04 September, 2001 (04.09.01), Example 6 (Family: none) | 2-4,6 |
| Y | JP 7-214624 A (Mitsubishi Heavy Industries, Ltd.), 15 August, 1995 (15.08.95), Par. No. [0011] (Family: none) | 2 |

| ☒ | Further documents are listed in the continuation of Box C. | ☐ | See patent family annex. |
|---|---|---|---|

* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| 10 May, 2005 (10.05.05) | 24 May, 2005 (24.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

### INTERNATIONAL SEARCH REPORT

International application No.

PCT/JP2005/004743

C (Continuation). DOCUMENTS CONSIDERED TO BE RELEVANT

| Category* | Citation of document, with indication, where appropriate, of the relevant passages | Relevant to claim No. |
|---|---|---|
| Y | JP 5-237913 A (Mitsubishi Heavy Industries, Ltd.), 17 September, 1993 (17.09.93), Par. No. [0010] & US 5393213 A & DE 4301431 A | 2 |
| Y | Masayoshi AOKI, Makoto IIDA, "Plastic Seikei Kanagata Seikei Manual", The Nikkan Kogyo Shinbun, Ltd., 27 August, 2002 (27.08.02), pages 296 to 299, 307 | 3 |
| Y | JP 10-193403 A (NOK Corp.), 28 July, 1998 (28.07.98), Par. Nos. [0002] to [0005] (Family: none) | 4 |
| Y | JP 2003-276047 A (Nippon Zeon Co., Ltd.), 30 September, 2003 (30.09.03), Par. Nos. [0031], [0032] (Family: none) | 6 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9309131 A

- JP 2003297120 A